# EUROPÄISCHE PATENTSCHRIFT

(11) **EP 0 969 648 B1**
(45) Veröffentlichungstag und Bekanntmachung des Hinweises auf die Patenterteilung: **01.03.2006**
(21) Anmeldenummer: 99112358.9
(22) Anmeldetag: 24.06.1999
(51) Int. Cl.: H04M 3/54, H04M 3/42, H04M 3/22, H04Q 3/66

(54) **Verfahren und System zur Sicherstellung einer Kommunikationsverbindung**
Method and system to secure a telecommunication link
Méthode et système pour la sécurisation d'une communication téléphonique

(30) Priorität: 30.06.1998 DE 19829222
(43) Veröffentlichungstag der Anmeldung: 05.01.2000
(73) Patentinhaber: SIEMENS AKTIENGESELLSCHAFT, 80333 München (DE)
(72) Erfinder: Von Essen, Dieter, 82008 Unterhaching (DE); Gilch, Gerhard, Dr., 81477 München (DE)

(56) Entgegenhaltungen:
- US-A- 5 751 789

## Beschreibung

Kommunikationsteilnehmer, welche eigene Vermittlungseinrichtungen betreiben sind häufig aus geschäftlichen Gründen auf die zuverlässige Funktion dieser Anlagen angewiesen und können für den Fall, daß diese durch Fremdeinwirkung, wie beispielsweise Brand- oder Wasserschaden in ihrer Funktionsfähigkeit gestört werden, wegen der damit verbundenen Störung ihrer Betiebsabläufe nicht so lange warten, bis Reparaturmaßnahmen eine Wiederinbetriebnahme des Systems ermöglichen. Da der geschäftliche Schaden, welcher durch den Ausfall einer Vermittlungseinrichtung bei deren Nutzer verursacht wird beträchtlich sein kann, besteht ein großes Bedürfnis seitens der Kommunikationsteilnehmer, daß längere Ausfälle nicht auftreten.

Aus der Patentschrift US-A-5 751 789 ist eine Lösung bekannt, welche die Probleme vermeiden hilft, die beim Ausfall von dezentralen Vermittlungseinrichtungen auftreten.

Die der Erfindung zugrunde liegende Aufgabe besteht darin, ein System und ein Verfahren anzugeben, womit eine Kommunikationsverbindung zu einem Kommunikationsteilnehmer auch hergestellt werden kann, falls dessen Vermittlungseinrichtung ausgefallen ist.

Diese Aufgabe wird für das Verfahren gemäß den Merkmalen des Patentanspruches 1 und für das System gemäß den Merkmalen des Patenanspruches 6 gelöst. Weiterbildungen der Erfindung ergeben sich aus den abhängigen Ansprüchen.

Vorteilhaft sieht das erfindungsgemäße Verfahren und System eine Lösung vor, welche Redundanz aufweist und bei der der Kommunikationsteilnehmer über zwei unterschiedliche Kommunikationsnetze erreichbar ist, wobei für den Fall, daß das durch die Vermittlungseinrichtung gesteuerte eine Kommunikationsnetz ausfällt, ein jeweiliger Kommunikationsteilnehmer über den gleichen Kommunikationscode erreichbar ist, der für ihn im ausgefallenen Kommunikationsnetz gültig ist. Auf diese Weise wird vorteilhaft sichergestellt, daß ein jeweiliger Kommunikationsteilnehmer ohne Probleme von außen erreichbar ist, obwohl seine Vermittlungseinrichtung nicht, oder nur teilweise funktionsfähig ist.

Vorteilhaft werden bei einer Weiterbildung des beschriebenen Verfahrens alle Kommunikationscodes der ausgefallenen Vermittlungseinrichtung für den Aufbau von Kommunikationsverbindungen verfügbar gehalten, auch für den Fall, daß nur eine Teilanzahl der ersten Kommunikationsteilnehmer über das zweite Kommunikationsnetz erreichbar ist, indem vorteilhafterweise eine Sonderbehandlung für diejenigen Kommunikationsteilnehmer durchgeführt wird, welche nicht auf direktem Wege erreichbar sind. Damit wird erreicht, daß alle Kommunikationsverbindungen zustande kommen können, obwohl nur eine beschränkte Anzahl von Kommunikationseinrichtungen verfügbar sind.

Vorteilhaft werden zur Überprüfung der Verfügbarkeit einzelner Kommunikationsteilnehmer deren Kommunikationscodes ausgewertet, da diese einen einfachen Zugriff und eine rechnerische Auswertung erlauben, wodurch die Durchführung von Sonderbehandlungen vereinfacht wird.

Vorteilhaft wird bei einer Weiterbildung des beschriebenen Verfahrens vor der Funktionsstörung der ersten Vermittlungseinrichtung festgelegt, welche Kommunikationsteilnehmer nach deren Ausfall, bzw. Funktionsstörung erreichbar sein müssen, da hierdurch sichergestellt werden kann, daß immer die wichtigsten Kommunikationsteilnehmer, beispielsweise Abteilungsleiter eines Unternehmens, erreichbar sind.

Vorteilhaft wird als Sonderbehandlung eine gespeicherte Nachricht ausgegeben.

Besonders vorteilhaft wird bei einer Weiterbildung des beschriebenen Verfahrens eine kommunikationscodespezifische Nachricht als Sonderbehandlung ausgegeben, da in Abhängigkeit des Kommunikationscodes ein jeweiliger zu erreichender Teilnehmer bestimmbar ist und für diesen Fall eine speziell auf diesen zugeschnittene Nachricht abgelegt werden kann.

Vorteilhaft wird bei einer Weiterbildung des beschriebenen Verfahrens eine Umsetzung von ersten Kommunikationscodes in zweite Kommunikationscodes derartig veranlaßt, daß eine in der Verbindungshierarchie der Vermittlungseinrichtung höher angesiedelte Vermittlungseinrichtung veranlaßt, daß für die erste Vermittlungseinrichtung aufzubauende Verbindungen zu einer dritten Vermittlungseinrichtung aufgebaut werden, und daß diese die Umsetzung der Kommunikationscodes durchführt. Auf diese Weise wird der Topologie der derzeit vorliegenden Telefonsysteme Rechnung getragen und es wird Dienstleistern ermöglicht, auf ihren eigenen Vermittlungssystemen kundenspezifische Störfallmaßnahmen durchzuführen.

Vorteilhaft weist ein beschriebenes System ein drahtgebundenes Kommunikationsnetz und ein drahtloses Kommunikationsnetz auf, wobei das drahtlose Kommunikationsnetz als Ausfallslösung für das drahtgebundene dient. Funknetze erfordern keinen großen Installationsaufwand und für Ausfälle der drahtgebundenen Kommunikationseinrichtungen können bspw. Mobiltelefone bereitgehalten werden.

Im folgenden wird ein Beispiel eines erfindungsgemäßen Verfahrens und eines erfindungsgemäßen Systems anhand eines Ausführungsbeispiels in einer Figur, welche eine beispielhafte Kommunikationsanordnung zeigt, weiter erläutert.

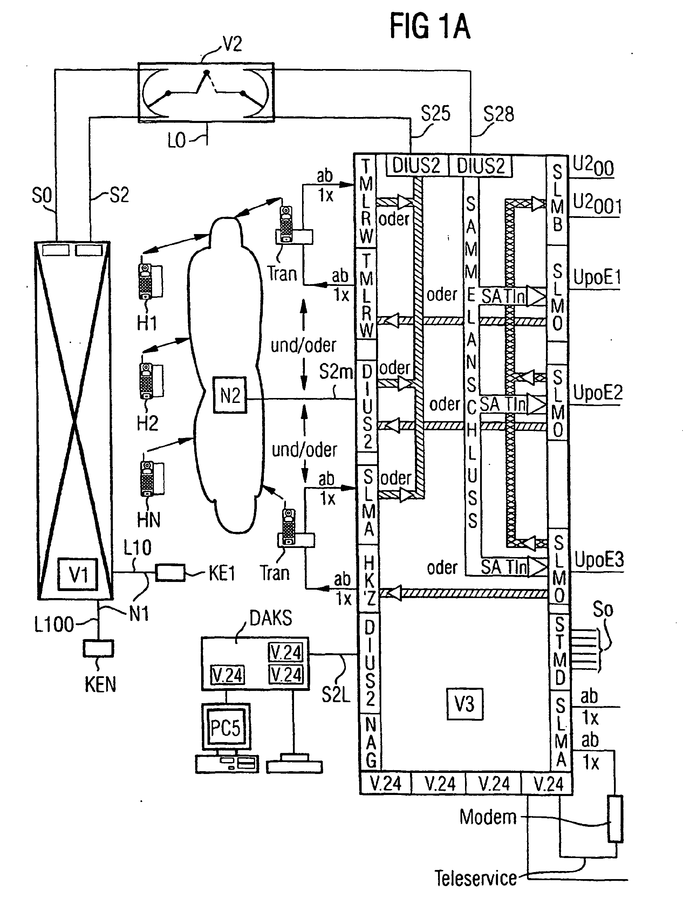

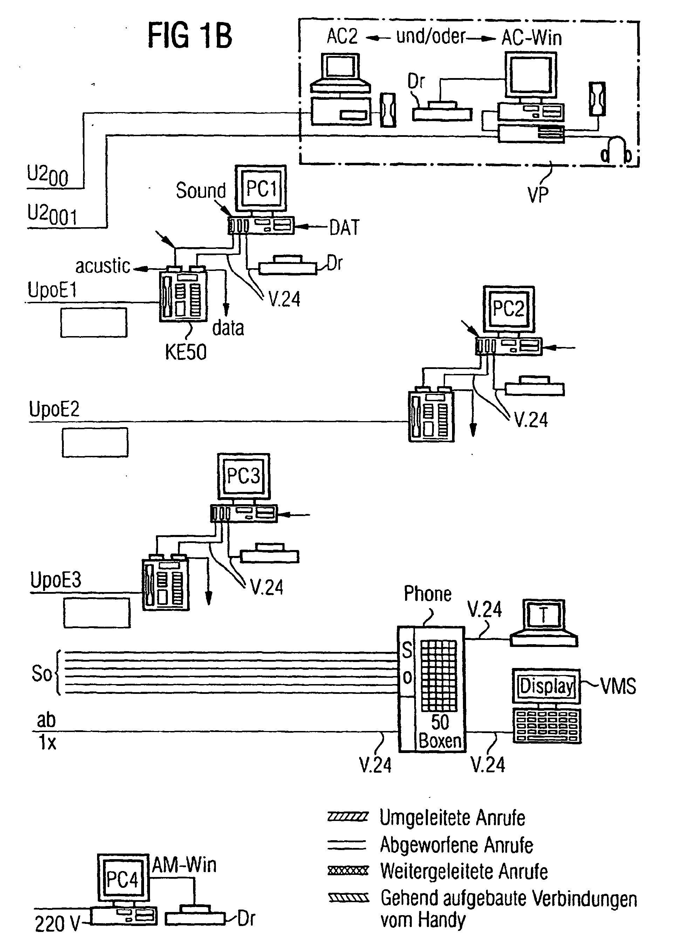

Wie die Figur zeigt besteht das Beispiel eines erfindungsgemäßen Systems aus Komponenten und Verfahrensmerkmalen. Hier sind im einzelnen drei Vermittlungseinrichtungen V1 bis V3 gezeigt. V1 ist über Leitungen S0 und S2 mit V2 verbunden. V2 ist über Leitungen S25 und S28 mit V3 verbunden. An die Vermittlungseinrichtung V1 sind über Leitungen L10 und L100 Kommunikationseinrichtungen KE1 und KEN angeschlossen. Bei diesen Kommunikationseinrichtungen kann es sich um beliebige bekannte Kommunikationseinrichtungen, wie PCs mit Modems, Telefone oder sonstige Einrichtungen handeln. Bei V2 kann es sich beispielsweise um eine digitale Ortsvermittlungseinrichtung handeln, welche alle Nummern mit einer bestimmten Eingangsnummer, welche für den Kommunikationscode der Vermittlungseinrichtung V1 steht, zu V1 weiterleitet. Von dort aus sind die einzelnen Kommunikationseinrichtungen, welche an V1 angeschlossen sind, bzw. welche von V1 bedient werden, über Erweiterungen dieses Kommunikationskodes erreichbar. V1 steht in diesem Fall in der Vebindungshierarchie über V2 und V3. In diesem Zusammenhang soll betont werden, daß es sich bei den erfindungsrelevanten Kommunikationsverbindungen sowohl um Sprachkommunikationsverbindungen, als auch um Datenkommunikationsverbindungen jeglicher Art handeln kann. Über die Vermittlungseinrichtung V1 ist beispielsweise ein erster Kommunikationsteilnehmer mittels der Kommunikationseinrichtung KE1 und eines bestimmten Kommunikationscodes erreichbar. Ankommende Verbindungswünsche treffen beispielsweise an V2 auf der Leitung L0 ein. Die Vermittlungseinrichtung V2 ist ebenfalls mit der Vermittlungseinrichtung V3 verbunden. Hier sei betont, daß es sich lediglich um ein Ausführungsbeispiel eines Systems handelt, da die Funktionalität von V3 auch in V2 enthalten sein kann, ohne daß dadurch die Durchführbarkeit der Erfindung in irgendeiner Form beeinträchtigt würde. An V3 sind einzelne Schnittstellenbaugruppen SLMA, HKZ, TMLRW, DIUS2, SLMB, SLMO, NAG, DIUS2 und V24 zu erkennen. Diese dienen dazu V3 mit spezifischen Endgeräten zu verbinden. Im einzelnen sind an V3 ein Vermittlungsplatz VP über die Schnittstelle SLMB angeschlossen und Steuereinrichtungen PC1 bis PC3, welche die Vermittlungseigenschaften von V3 beeinflussen können. Eine solche Steuereinrichtung weist beispielsweise eine Kommunikationseinrichtung in Form eines Telefons KE50 auf, das mit einem Rechner und einem Drucker PR verbunden ist. Dort sind beispielsweise Spracheingabemöglichkeiten Sound und Sprachausgabemöglichkeiten acustic vorhanden. Über einen Datenkanal DAT kann PC1 mit kommunikationsspezifischen Daten versorgt werden. Im Zusammenhang mit der Ausführung der Erfindung kann es sich bei diesen Daten um.Verbindungsdaten handeln, bzw. um Umsetztabellen für Kommunikationscodes, welche angeben, welche Teilnehmer nach einem Ausfall von V1 bzw. bei gestörter Funktionsfähigkeit von V1 über N2 erreichbar sein sollen und welche Kommunikationscodes des Kommunikationsnetzes N1 welchen Kommunikationscodes von N2 zugeordnet werden sollen. Zusätzlich weist die Vermittlungseinrichtung V3 auch die Möglichkeit der Verarbeitung von Sprachnachrichten Phon auf, welche durch so in Form eines Mail-Servers an einer Schnittstelle STMD an V3 angebunden ist. Die Administration dieser Sprachnachrichten kann mittels eines PCs T oder einer anderen Steuereinrichtung VMS durchgeführt werden. Am Vermittlungsplatz VP sind beispielsweise Vermittlungssteuerungseinrichtungen AC2 oder AC-Win vorhanden, mit denen auf S25 und S28 ankommende Verbindungen in spezifischer Weise zu den verschiedenen Ausgängen von V3 dirigiert werden können. Weiterhin ist an V3 über die Leitungen S2L ein Einrichtung DAKS angekoppelt, über welche mehrere Kommunikationsverbindungen zu konferenzzwecken zusammengeschaltet werden können, bzw. über welche mehrere Kommunikationsteilnehmer alarmierbar sind. Diese Einrichtung DAKS wird über eine Steuerung PC5 administriert. An den verschiedenen Einrichtungen, sind Drucker DR vorhanden, um Transaktionsprotokolle ausdrucken zu können.

Über V3 ist ein drahtloses Kommunikationsnetz N2 erreichbar. Die Verbindungen zwischen V3 und N2 werden beispielsweise über Transceiver Tran drahtlos, oder über Leitungen S2m hergestellt. Über das drahtlose Kommunikationsnetz N2 sind Kommunikationseinrichtungen H1 bis HN erreichbar. Beim beschriebenen System verfügt beispielsweise der Kommunikationsteilnehmer, welcher über V1 an der Kommunikationseinrichtung KE1 erreichbar ist, über die drahtlose Kommunikationseinrichtung H1. Diese drahtlose Kommunikationseinrichtung H1 ist über das drahtlose Kommunikationsnetz N2 mittels eines netzspezifischen Kommunikationscodes erreichbar.

Erfindungsgemäß wird die Funktionsfähigkeit der Vermittlungseinrichtung V1 überwacht. Hierzu können beispielsweise an V1 spezifische Sensoren vorgesehen sein, welche Hitze, Kälte oder Wasser detektieren, oder die so eingerichtet sind, daß sie andere Umweltsituationen erfassen können, welche Funktionsstörungen der Vermittlungeinrichtung V1 zur Folge haben. Im Falle des Ansprechens eines solchen Sensors kann beispielsweise die Vermittlungseinrichtung V2 verständigt werden, in welcher die Funktionsstörung ausgewertet wird. Es sind aber auch Fälle denkbar, in welchen die Vermittlungseinrichtung V2 regelmäßig den Zustand von V1 abfragt und falls sie keine Antwort erhält, automatisch das Vorlegen einer Funktionsstörung von V1 detektiert. Es kann aber auch lediglich eine Schleife zwischen V1 und V2 vorgesehen sein, deren Unterbrechung eine Funktionsstörung bei V1 anzeigt. Weiterhin besteht die Möglichkeit eine Kombination aus diesen unterschiedlichen Möglichkeiten zur Detektion von Funktionsstörungen heranzuziehen, um eine besonders sichere Aussage über das Vorliegen einer Funktionsstörung von V1 zu erhalten.

Erfindungsgemäß wird für den Fall, daß eine Funktionsstörung von V1 vorliegt von V2 veranlaßt, daß die Kommunikationscodes, welche für Kommunikationsteilnehmer an V1 gelten, bzw. mit welchen Kommunikationseinrichtungen von V1 erreichbar sind, dargestellt sind hier KE1 und KEN, in Kommunikationscodes des drahtlosen Kommunikationsnetzes N2 umgesetzt werden. Über N2 sind mittels dieser Kommunikationscodes Kommunikationseinrichtungen H1 bis HN erreichbar. Für den Fall, daß nun ein externer Teilnehmer versucht über L0 denjenigen Kommunikationsteilnehmer zu erreichen, welcher normalerweise, d.h. ohne Vorliegen einer Funktionsstörung von V1, über die Kommunikationseinrichtung KE1 erreichbar ist, gibt er dessen Kommunikationscode in seine Kommunikationseinrichtung ein. In V2 wird dieser Kommunikationscode zu V3 umgeleitet und dort in einen Kommunikationscode umgesetzt, mit welchem über N2 die Kommunikationseinrichtung H1 erreichbar ist. Zur Festlegung der jeweiligen Zuordnung der einzelnen Nummern in den verschiedenen Kommunikationsnetzen werden beispielsweise die Daten über einen Datenkanal DAT in eine Steuereinrichtung der Vermittlungseinrichtung V3, PC1, eingespeist. PC1 überwacht in diesem Fall die bei V3 eingehenden Kommunikationscodes und falls eine solcher Kommunikationscode als Kommunikationscode der Vermittlungseinrichtung V1 identifiziert wird, wird dieser automatisch gemäß der vorliegenden Zuordnungstabelle in einen Kommunikationscode für das drahtlose Kommunikationsnetz N2 umgesetzt. Für den Fall, daß bei gestörter Funktionsfähigkeit von V1 gemäß einer zuvor festgelegten Prioritätenliste lediglich ein Teil der Kommunikationsteilnehmer von V1 über das Kommunikationsnetz N2 erreichbar sind, wird von PC1 für solche Kommunikationscodes, die nicht erreichbare Kommunikationsteilnehmer betreffen, die Ausgabe einer Nachricht auf der entsprechenden Kommunikationsverbindung veranlaßt. Beispielsweise kann dies eine Sprachnachricht sein, die auf einem Sprachmail-Server Phon abgelegt ist. Um diejenigen Kommunikationsteilnehmer, welche um eine Kommunikationsverbindung mit Kommunikationsteilnehmern von V1 nachsuchen spezifisch informieren zu können, kann abhängig von den Kommunikationscodes dieser Kommunikationsteilnehmer von V1 eine spezifische Nachricht an die Kommunikationssuchenden ausgegeben werden. Es besteht ebenfalls die Möglichkeit, daß spezifische Kommunikationscodes an den Vermittlungsplatz VP weitergegeben werden. Beispielsweise werden abgeworfene Anrufe, wie das in der Legende dargestellt ist, an den Vermittlungsplatz VP weitergeleitet. In der Legende sind unterschiedliche Schraffuren für verschiedene Verbindungsarten dargestellt, um anzuzeigen, daß auch vom Kommunikationsnetz N2 abgehende Anrufe über V3 vermittelbar sind. Es besteht ebenfalls die Möglichkeit, die abgehenden Anrufe von den Kommunikationseinrichtungen H1 bis HN direkt über das Kommunikationsnetz N2 zu vermitteln. Gemäß der unterschiedlichen Leistungsfähigkeit des Kommunikationsnetzes N2, bzw. weiterer anderer drahtloser Kommunikationsnetze besteht die Möglichkeit vorhandene Leistungsmerkmale, die beispielsweise in einer Kommunikationseinrichtung KE1 vorhanden sind, auch mit einer Kommunikationseinrichtung H1 zu nutzen.

Das hier gezeigte Beispiel unter Verwendung eines drahtgebundenen und eines Funknetzes läßt sich ebenso für zwei drahtgebundene Netze, bzw. für zwei Funknetze einrichten, ohne das dadurch die Durchführbarkeit der Erfindung behindert würde. In Abhängigkeit von der Bedeutung, welche die Internettelefonie in Zukunft bekommen wird, ist es auch denkbar, daß der Kommunikationsteilnehmer, der über einen Kommunikationscode von V1 mit der Kommunikationseinrichtung KE1 erreichbar ist, bei Ausfall von V1 automatisch über einen Kommunikationscode erreichbar ist, über den sein Internettelefon ansteuerbar ist. Auf dieselbe Weise wie Sprachverbindungen umgeleitet werden können, indem die entsprechenden Nummern als Kommunikationscodes umgesetzt werden, ist es auch denkbar, daß elektronische Nachrichten in Form von Textnachrichten oder Datennachrichten oder Videonachrichten automatisch nach dem erfindungsgemäßen Verfahren umgeleitet werden. Das erfindungsgemäße System muß dann lediglich um Mittel zur Texteingabe, bzw. Bildeingabe und zu deren Reproduktion ergänzt werden.

## Patentansprüche

1. Verfahren zur Sicherstellung einer Kommunikationsverbindung, bei dem
- die Funktionsfähigkeit einer ersten Vermittlungseinrichtung (V1), über die mindestens ein erster Kommunikationsteilnehmer mittels eines ersten Kommunikationscodes durch eine erste Kommunikationseinrichtung (KE1) erreichbar ist, überwacht wird,
- bei gestörter Funktionsfähigkeit der ersten Vermittlungseinrichtung (V1) in mindestens einer der ersten Vermittlungseinrichtung (V1) im Kommunikationssignalfluß vorangehenden zweiten Vermittlungseinrichtung (V2) anhand einer Zuordnungstabelle automatisch eine Umsetzung des ersten Kommunikationscodes in einen zweiten Kommunikationscode veranlaßt wird, mit welchem der erste Kommunikationsteilnehmer durch mindestens eine zweite Kommunikationseinrichtung (H1) erreichbar ist,
**dadurch gekennzeichnet, daß** zur Überprüfung einer Verfügbarkeit eines Kommunikationsteilnehmers dessen Kommunikationscode ausgewertet wird, daß zu einer ausgefallenen Vermittlungseinrichtung zugeordnete Kommunikationscodes für einen Aufbau von Kommunikationsverbindungen verfügbar gehalten werden, und daß für solche Kommunikationsverbindungen eine Sonderbehandlung durchgeführt wird, für die gemäß einer festgelegten Prioritätenliste keine Zuordnung von ersten Kommunikationscodes zu zweiten Kommunikationscodes existiert.

2. Verfahren nach Anspruch 1,
bei dem vor einer Funktionsstörung der ersten Vermittlungseinrichtung (V1) anhand der Prioritätenliste diejenigen ersten Kommunikationscodes festgelegt werden, die nach der Funktionsstörung der ersten Vermittlungseinrichtung (V1) über die zweite Vermittlungseinrichtung (V2) erreichbar sein müssen und für den Zugriff der zweiten Vermittlungseinrichtung (V2) abrufbar abgelegt werden.

3. Verfahren nach einem der Ansprüche 1 oder 2,
bei dem als Sonderbehandlung über eine Kommunikationsverbindung eine gespeicherte Nachricht ausgegeben wird.

4. Verfahren nach einem der Ansprüche 1 bis 3,
bei dem zu mindestens zwei verschiedenen ersten Kommunikationscodes jeweils eine unterschiedliche Nachricht ausgegeben wird.

5. Verfahren nach einem der Ansprüche 1 bis 4,
bei dem die Veranlassung der Umsetzung von ersten Kommunikationscodes in zweite Kommunikationscodes durch die zweite Vermittlungseinrichtung (V2) derart ausgeführt ist, daß diese zweite Vermittlungseinrichtung (V2) die ersten Kommunikationscodes an eine dritte Vermittlungseinrichtung (V3) weiterleitet und diese dritte Vermittlungseinrichtung (V3) die Umsetzung der Kommunikationscodes und einen Verbindungsaufbau zur Erstellung der Kommunikationsverbindung durchführt.

6. System zur Sicherstellung einer Kommunikationsverbindung mit
- ersten Kommunikationseinrichtungen (KE1, KEN) und mindestens zweiten Kommunikationseinrichtungen (H1,...,HN) mit denen erste Kommunikationsteilnehmer über je einen ersten Kommunikationscode, bzw. zweite Kommunikationsteilnehmer über je einen zweiten Kommunikationscode erreichbar sind,
- einer ersten Vermittlungseinrichtung (V1) in deren ersten Kommunikationsnetz (N1) die ersten Kommunikationseinrichtungen (KE1, KEN) eingebunden sind und mindestens einer zweiten Vermittlungseinrichtung (V2) in deren zweiten Kommunikationsnetz (N2) zweite Kommunikationseinrichtungen eingebunden sind,
- ersten Mitteln zur Überwachung der Funktionsfähigkeit der ersten Vermittlungseinrichtung (V1),
- zweiten Mitteln zur Umsetzung von ersten Kommunikationscodes in zweiten Kommunikationscodes anhand einer Zuordnungstabelle in Abhängigkeit einer von den ersten Mitteln festgestellten gestörten Funktionsfähigkeit der ersten Vermittlungseinrichtung (V1),
**gekennzeichnet durch**,
- zumindest ein Kommunikationscode-Auswertemittel zur Überprüfung einer Verfügbarkeit eines Kommunikationsteilnehmers,
- zumindest ein Mittel zum Verfügbarhalten von zu einer ausgefallenen Vermittlungseinrichtung zugeordneten Kommunikationscodes für einen Aufbau von Kommunikationsverbindungen,
- zumindest ein Mittel zur Durchführung einer Sonderbehandlung für solche Kommunikationsverbindungen, für die gemäß einer festgelegten Prioritätenliste keine Zuordnung von ersten Kommunikationscodes zu zweiten Kommunikationscodes existiert.

## Claims

1. Method for securing a telecommunication link, in which
- the operability of a first switching centre (V1), via which at least one first communication user can be reached by means of a first communication code through a first communication device (KE1), is monitored.
- if the operability of the first switching centre (V1) is disrupted, in at least one second switching centre (V2) preceding the first switching centre (V1) in the communication signal flow, the first communication code is automatically converted, on the basis of an assignment table, into a second communication code with which the first communication user can be reached through at least one second communication device (H1),
**characterized in that**, to check availability of a communication user, their communication code is evaluated, communication codes assigned to a failed switching centre are kept available for establishing telecommunication links, and special handling is undertaken for such telecommunication links, for which, in accordance with a defined list of priorities, no assignment of first communication codes to second communication codes exists.

2. Method in accordance with claim 1,
in which before a malfunction of the first switching centre (V1) those first communication codes are defined on the basis of the priority list which must be accessible via the second switching centre (V2) after the malfunction of the first switching centre (V1) and for which access by the second switching centre (V2) must be stored so that it can be retrieved.

3. Method in accordance with one of the claims 1 or 2,
in which a stored message is output as special handling via a telecommunications link.

4. Method in accordance with one of the claims 1 to 3,
in which a different message is output in each case for at least two different first communication codes.

5. Method in accordance with one of the claims 1 to 4,
In which the switching centre causes the first communication code to be converted into a second communication code by a second switching centre (V2) such that this second switching centre (V2) forwards the first communication code to a third switching centre (V3) and this third switching centre (V3) converts the communication code and sets up a connection for establishing the telecommunications link.

6. System for securing a telecommunications link with
- first communication devices (KE1, KEN) and at least second communication devices (H1,...,HN) with which first communication users can be accessed via a first communication code or second communication users via a second communication code in each case,
- a first switching centre (V1) into the first communication network (N1) of which the first communication devices (KE1, KEN) are incorporated and at least a second switching centre (V2) into the second communication network (N2) of which second communication devices are incorporated
- first means for monitoring the operability of the first switching centre (V1),
- second means for converting first communication codes into second communication codes on the basis of an assignment table depending on disruptions to the operability of the first switching centre (V1) established by the first means,
**characterized by**,
- at least one communication code evaluation means for checking the availability of a communication user,
- at least one means for keeping available the communication codes for a failed switching centre for setting up telecommunications links,
- at least one means for executing special handling for such telecommunications links for which no assignment of first communication codes to second communication codes in accordance with a defined priority list exists.

## Revendications

1. Procédé pour sécuriser une liaison de communication, dans lequel
- le bon fonctionnement d'un premier dispositif de commutation (V1), par lequel au moins un premier correspondant de communication peut être joint au moyen d'un premier code de communication par un premier dispositif de communication (KE1), est contrôlé,
- en cas de perturbation du bon fonctionnement du premier dispositif de commutation (V1), on demande dans au moins un deuxième dispositif de commutation (V2) précédant le premier dispositif de commutation (V1) dans le flux de signal de communication à l'aide d'un tableau d'attribution automatiquement une conversion du premier code de communication en un deuxième code de communication, avec lequel le premier correspondant de communication peut être joint par au moins un deuxième dispositif de communication (H1),
**caractérisé en ce que**, pour contrôler une disponibilité d'un correspondant de communication, son code de communication est analysé, **en ce que** des codes de communication attribués à un dispositif de commutation tombé en panne sont maintenus disponibles pour un établissement de liaisons de communication et **en ce que**, pour de telles liaisons de communication, on effectue un traitement spécial pour lequel, selon une liste de priorités définie, il n'existe pas d'attribution de premiers codes de communication à des deuxièmes codes de communication.

2. Procédé selon la revendication 1,
dans lequel, avant un dysfonctionnement du premier dispositif de commutation (V1), on définit à l'aide de la liste des priorités les premiers codes de communication qui doivent être joignables après le dysfonctionnement du premier dispositif de commutation (V1) par le deuxième dispositif de commutation (V2) et qui sont mémorisés de façon à pouvoir être appelés pour l'accès du deuxième dispositif de commutation (V2).

3. Procédé selon l'une quelconque des revendications 1 ou 2,
dans lequel, comme traitement spécial, un message mémorisé est émis au moyen d'une liaison de communication.

4. Procédé selon l'une quelconque des revendications 1 à 3,
dans lequel à chaque fois un message différent est émis à au moins deux premiers codes de communication différents.

5. Procédé selon l'une quelconque des revendications 1 à 4,
dans lequel la demande de conversion de premiers codes de communication en deuxièmes codes de communication est effectuée par le deuxième dispositif de commutation (V2) de telle sorte que ce deuxième dispositif de commutation (V2) transmet les premiers codes de communication à un troisième dispositif de commutation (V3) et ce troisième dispositif de commutation (V3) effectue la conversion des codes de communication et un établissement de liaison pour l'établissement de la liaison de communication.

6. Système pour sécuriser une liaison de communication comprenant
- des premiers dispositifs de communication (KE1, KEN) et au moins des deuxièmes dispositifs de communication (H1, ..., HN) avec lesquels des premiers correspondants de communication resp. des deuxièmes correspondants de communication peuvent être joints respectivement au moyen d'un premier code de communication ou d'un deuxième code de communication,
- un premier dispositif de commutation (V1), dans le premier réseau de communication (N1) duquel, les premiers dispositifs de communication (KE1, KEN) sont intégrés, et au moins un deuxième dispositif de commutation (V2), dans le deuxième réseau de communication (N2) duquel, des deuxièmes dispositifs de communication sont intégrés,
- des premiers moyens pour le contrôle du bon fonctionnement du premier dispositif de commutation (V1),
- des deuxièmes moyens pour la conversion de premiers codes de communication en deuxièmes codes de communication à l'aide d'un tableau d'attribution en fonction d'une perturbation du bon fonctionnement par les premiers moyens du premier dispositif de commutation (V1),
**caractérisé par**
- au moins un moyen d'analyse de code de communication pour contrôler une disponibilité d'un correspondant de communication,
- au moins un moyen pour la mise à disposition de codes de communication attribués à un dispositif de commutation tombé en panne, pour un établissement de liaisons de communication,
- au moins un moyen pour la mise en oeuvre d'un traitement spécial pour de telles liaisons de communication pour lesquelles il n'existe pas, selon une liste de priorités définie, une attribution de premiers codes de communication à des deuxièmes codes de communication.
